# EUROPÄISCHE PATENTSCHRIFT

(11) **EP 1 741 575 B1**
(45) Veröffentlichungstag und Bekanntmachung des Hinweises auf die Patenterteilung: **23.11.2011**
(21) Anmeldenummer: 06010157.3
(22) Anmeldetag: 17.05.2006
(51) Int. Cl.: B60G 3/20, B60G 7/00

(54) **Radaufhängung für die gelenkten Räder eines Kraftfahrzeuges**
Wheel support for the steerable wheels of a motor vehicle
Suspension de roue pour les roues directrices d'un véhicule automobile

(30) Priorität: 04.07.2005 DE 102005031178
(43) Veröffentlichungstag der Anmeldung: 10.01.2007
(73) Patentinhaber: AUDI AG, 85045 Ingolstadt (DE)
(72) Erfinder: Züge, Frank, 85110 Schelldorf (DE)
(74) Vertreter: Asch, Konrad

(56) Entgegenhaltungen:
- DE-A1- 1 938 850
- DE-A1- 3 509 145
- DE-A1- 3 714 688
- DE-A1- 3 826 930
- DE-A1- 4 313 978
- GB-A- 2 246 329
- PATENT ABSTRACTS OF JAPAN Bd. 017, Nr. 576 (M-1499), 20. Oktober 1993 (1993-10-20) -& JP 05 169941 A (MAZDA MOTOR CORP), 9. Juli 1993 (1993-07-09)

## Beschreibung

Die Erfindung betrifft eine Radaufhängung für die gelenkten Räder von Kraftfahrzeugen gemäß dem Oberbegriff des Patentanspruches 1.

Eine derartige Radaufhängung zeigt beispielsweise die DE 19 38 850 C3, bei der die oberen und/oder die unteren Lenker der Radführung Einzellenker sind, die in Verbindung mit der Spurstange der Lenkung des Kraftfahrzeuges eine spurstabile Radführung bilden. Der Vorteil einer derartigen Radaufhängung mit aufgelösten Lenkern liegt insbesondere in der Bildung einer virtuellen Lenkachse, die weitgehendst unabhängig von baulichen Zwängen so gelegt werden kann, dass günstige Achswerte wie Radsturz, Nachlauf, Lenkrollradius, Störkrafthebelarm bei angetriebenen Rädern (Maß a), etc. einstellbar sind. Ein zur DE 19 38 850 C3 ähnlicher Aufbau ist auch aus der DE 35 09 145 A1 bekannt.

Aus der DE 38 26 930 A1 ist ein gattungsbildendes Radaufhängungssystem bekannt, wobei ein oberer und unterer Teil eines Radträgers, die ein Rad drehbar lagern, mit einem Fahrzeugkörper zusammengekoppelt sind, und zwar mittels eines oberen bzw. eines unteren seitlichen Verbindungselementes. Das obere seitliche Verbindungselement umfasst ein Paar von oberen seitlichen Verbindungsgliedern, die hintereinander angeordnet sind, wobei die seitlichen Verbindungsglieder innere Enden aufweisen, die gelenkig am Fahrzeugkörper auf im Wesentlichen derselben Höhe angreifen, während die äußeren Enden gelenkig am Radträger an unterschiedlichen Höhen angreifen. Dadurch soll eine Radaufhängung zur Verfügung gestellt werden, bei der der Karosserieaufbau an den Punkten der gelenkigen Anbindung zwischen den oberen seitlichen Verbindungsgliedern und der Karosserie vereinfacht wird und das zudem eine günstige Anti-Nick-Geometrie bietet. In der räumlichen Betrachtung der Fig. 4 der DE 38 26 930 A1 ist der radträgerseitige Koppelabstand der oberen Lenker größer als der radträgerseitige Koppelabstand der unteren Lenker.

Aufgabe der Erfindung ist es, eine Radaufhängung der gattungsgemäßen Art derart weiterzubilden, dass deren elastokinematisches Verhalten verbessert wird, insbesondere sollen geringe Änderungen des effektiven Spurhebelradius und geringe Änderungen der Nachlaufstrecke über den Lenkbereich verwirklicht werden.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß wird vorgeschlagen, dass in der Projektion in Richtung der virtuellen Lenkachse der Koppelabstand aₒ der oberen Lenker am Radträger größer ist als der Koppelabstand aᵤ der unteren Lenker am Radträger, so dass die virtuelle Lenkachse über den gesamten Lenkbereich gesehen eine sich nach unten, der Radaufstandsfläche zu verjüngende Konusfläche bildet, während dagegen räumlich gesehen der tatsächliche radträgerseitige Koppelabstand aₒ der oberen Lenker kleiner ist als der tatsächliche radträgerseitige Koppelabstand aᵤ der unteren Lenker.

Dadurch lässt sich eine vorteilhafte Lenkkinematik in Verbindung mit einer aufgelösten Vierlenkeranordnung mit unterer Druckstrebenachse erzielen. Besonders vorteilhaft gelingt dies, wenn zusätzlich das Lenkgetriebe mit den Spurstangen in etwa auf Höhe der unteren Lenker und in Fahrtrichtung vor der Radmitte der Räder und der unteren, vorderen Lenker angeordnet ist.

Dabei können zur Herstellung eines in der Projektion der Lenkachse gesehen besonders kleinen Koppelabstandes der unteren Lenker die Lagerstellen der Lenker am Radträger höhenversetzt zueinander liegen. Insbesondere wenn die Lenkerlager Kugelgelenke sind, können deren aus den Kugelgehäusen ragende Gelenkachsen in zueinander um 180 Grad gedrehter Anordnung nach oben bzw. nach unten ragen.

Des weiteren können die unteren, vorderen Lenker in Draufsicht gesehen und in Geradeausfahrtstellung des Kraftfahrzeuges im wesentlichen parallel und quer zur Fahrzeuglängsachse ausgerichtet sein, während die unteren, hinteren Lenker jeweils schräg nach hinten verlaufen. Dies ermöglicht eine präzise Radführung mit gezielt steuerbarer Elastokinematik des Fahrverhaltens des Kraftfahrzeuges von sportlich agil bis betont komfortabel.

Insbesondere können dazu die Spurstangen und die unteren, vorderen Lenker in Draufsicht gesehen und in Geradeausfahrtstellung des Kraftfahrzeuges im wesentlichen parallel und quer zur Fahrzeuglängsachse ausgerichtet sein.

In vorteilhafter Weiterbildung der Erfindung kann die Anordnung der Lenker am Radträger derart ausgelegt sein, dass sich über den gesamten Lenkbereich der Radaufhängung eine überwiegend in Längsrichtung des Kraftfahrzeuges ausgerichtete Schnittfläche der von der Lenkachse überstrichenen Konusfläche an der Radaufstandsfläche und ergibt, wodurch der effektive Spurhebelradius günstig beeinflusst und die Lenkungsrückstellung bei eingeschlagenen Rädern in die Geradeausfahrtposition verstärkt wird.

Ferner können in an sich bekannter Weise die Lagerstellen zwischen Lenkern und Radträger oben über dem jeweiligen Rad so positioniert sein, dass der Abstand der virtuellen Lenkachse zur Radmitte relativ gering ist. Dadurch wird die direkte Lenkübersetzung über das vorne unten angeordnete Lenkgetriebe mit den Spurstangen stabilisiert und werden Störmomente in Längs- und Seitenrichtung auf die Radführung verbessert abgestützt.

Besonders vorteilhaft für die Lenkkinematik ist eine Anordnung gemäß Anspruch 8, bei der sich die oberen und unteren Koppeln in Richtung der Lenkachse gesehen kreuzen.

Ein Ausführungsbeispiel der Erfindung ist im folgenden mit weiteren Einzelheiten näher erläutert. Die schematische Zeichnung zeigt in:
- **Fig. 1**: in einer raumbildlichen Ansicht schräg von vorne eine linke Radauf- hängung für gelenkte und angetriebene Räder eines Kraftfahrzeuges, mit oberen und unteren Lenkern, einem Radträger, einem Federbein, einer Lenkung und einem Stabilisator;
- **Fig. 2**: eine Seitenansicht auf den Radträger, die unteren Lenker und die Spur- stange der Radaufhängung gemäß Fig. 1;
- **Fig. 3**: eine Draufsicht auf die unteren Lenker, die Spurstange und den Stabili- sator der Radaufhängung nach Fig. 1;
- **Fig. 4a**: eine grafische Darstellung der virtuellen Lenkachse und der von der Lenkachse überstrichenen Konusfläche über den Lenkbereich der Rad- aufhängung; und
- **Fig. 4b**: eine Projektion in Richtung der virtuellen Lenkachse, die zeigt, dass der Koppelabstand aₒ größer ist als der Koppelabstand aᵤ; und
- **Fig. 5**: eine grafische Darstellung des Momentandrehpols der unteren Lenker mit Radträger bei Längs- und Seitenkräften auf die Radaufhängung.

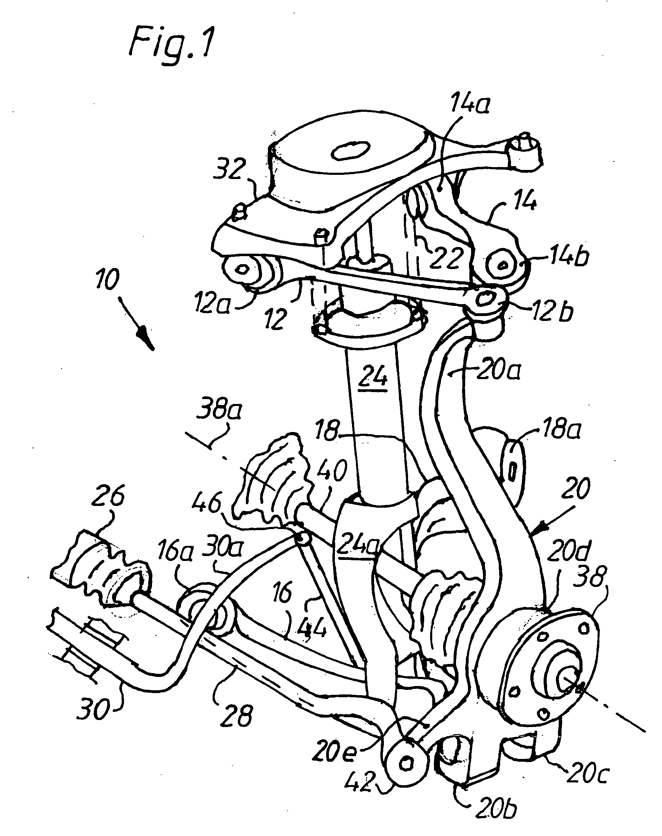

In den **Fig. 1 bis 3** ist eine vordere, linke Radaufhängung 10 für Kraftfahrzeuge dargestellt, die sich im wesentlichen aus zwei oberen einzelnen Lenkern 12, 14, zwei unteren einzelnen Lenkern 16, 18, einem Radträger 20, einem aus einer Tragfeder 22 und einem Teleskopstoßdämpfer 24 gebildeten Federbein, einem Zahnstangenlenkgetriebe 26 mit Spurstangen 28 und einem U-förmigen Stabilisator 30 zusammensetzt.

Das Zahnstangenlenkgetriebe 26 ist bekannter Bauart und nur angedeutet dargestellt. Die rechte Radaufhängung 10 sowie der quer verlaufende Stabilisator 30 sind spiegelbildlich gleich ausgeführt.

Die oberen Lenker 12, 14 sind wie ersichtlich in einem definierten Winkel zueinander angeordnet und über innere Lagerstellen 12a, 14a an einer Lagerkonsole 32 angelenkt. An der Lagerkonsole 32 ist ferner das Federbein 22, 24 gelenkig abgestützt. Die Lagerkonsole 32 ist mittels mehrerer Schrauben (nicht dargestellt) mit dem Aufbau des Kraftfahrzeuges fest verbunden.

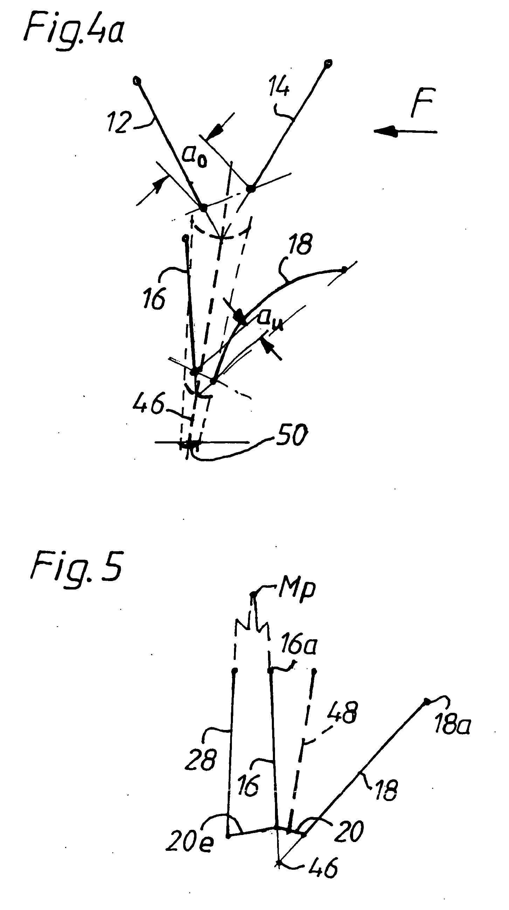

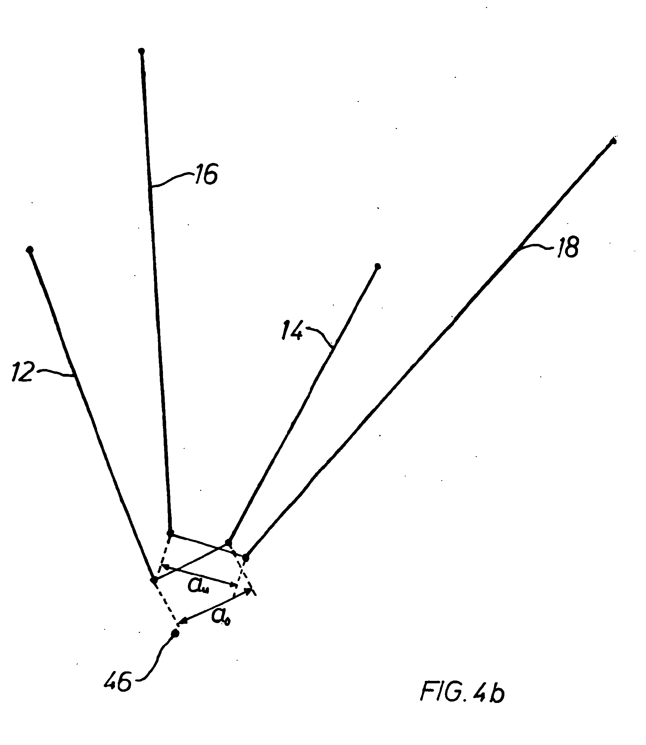

Die äußeren, als Kugelgelenke ausgebildeten Lagerstellen 12b, 14b der Lenker 12, 14 sind oberhalb des Rades (nicht dargestellt) des Kraftfahrzeuges an einem nach oben geführten Arm 20a des Radträgers 20 in einem definierten Koppelabstand aₒ angelenkt (vgl. **Fig. 4a** **und b**). Der Arm 20a ist dabei zur Bereitstellung eines ausreichenden Freiganges des Rades nach innen gekrümmt ausgeführt.

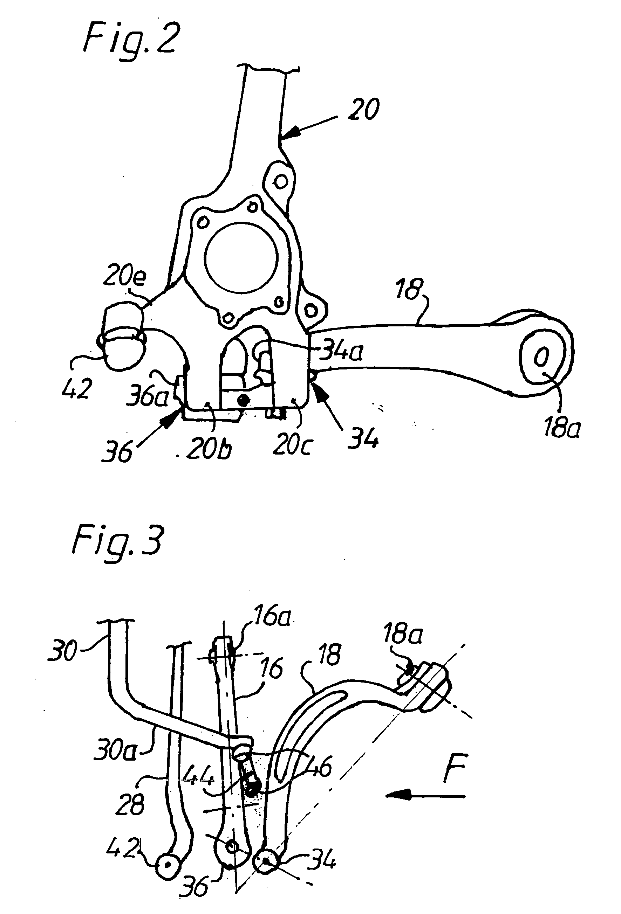

Die unteren Lenker 16, 18 sind einerseits über Lenkerlager 16a, 18a mit dem nicht dargestellten Aufbau des Kraftfahrzeuges gelenkig verbunden und andererseits an unteren Aufnahmen 20b, 20c des Radträgers 20 über Kugelgelenke 34, 36 (vgl. **Fig. 2**) in einem Koppelabstand aᵤ angelenkt. Die Aufnahmen 20b, 20c liegen relativ nahe unterhalb der Raddrehachse 38a, die durch die nicht dargestellte Radlagerung innerhalb eines nabenförmigen Abschnittes 20d des Radträgers 20 und einem drehbar gelagerten Radflansch 38 definiert ist. Der Radflansch 38 ist mit einer Antriebswelle 40 zum Antrieb des Rades trieblich verbunden.

Der vordere, untere Lenker 16 bildet dabei den entsprechend verstärkt ausgelegten Traglenker der Radaufhängung 10, an dem ein gabelförmiger Abschnitt 24a des Teleskopstoßdämpfers 24 in relativer Nähe zu den Aufnahmen 20b, 20c des Radträgers 20 angelenkt ist. Der Abschnitt 24a umgreift dabei den Lenker 16 und ist unter Zwischenschaltung eines gummielastischen Lagers (nicht dargestellt) mit einer den Lenker 16 und die Schenkel des gabelförmigen Abschnittes 24a durchdringenden Schraube mit dem Lenker 16 verbunden. Wie ersichtlich ist, ist auch die Antriebswelle 40 durch den Abschnitt 24a hindurchgeführt.

Der vordere, untere Lenker 16 ist im wesentlichen quer zur Längsrichtung des Kraftfahrzeuges ausgerichtet, während der hintere, untere Lenker 18 in einem Winkel von ca. 45 Grad zum vorderen Lenker 16 angeordnet ist (vgl. **Fig. 3**). Durch die dargestellte, relativ starke Krümmung des Lenkers 18 nach innen ist der Freigang des Rades beim vollen Lenkeinschlag des Rades sichergestellt.

Das Zahnstangenlenkgetriebe 26 mit der abtreibenden Spurstange 28 ist in Fahrtrichtung F des Kraftfahrzeuges gesehen vor dem Lenker 16 im wesentlichen in der durch die unteren Lenker 16, 18 gebildeten Horizontalebene angeordnet, wobei die Spurstange 28 etwa parallel bzw. leicht gepfeilt zum Lenker 16 ausgerichtet ist. Die Spurstange 28 ist über ein Kugelgelenk 42 mit dem nach vorne ragenden Lenkarm 20e des Radträgers 20 verbunden.

Noch räumlich vor dem Lenkgetriebe 26 ist der U-förmige Stabilisator 30 am Aufbau des Kraftfahrzeuges drehbar gelagert, dessen im wesentlichen in Längsrichtung verlaufender Schenkel 30a die Spurstange 28 und den Lenker 16 quert und über eine nach unten ragende Koppelstange 44 und über Gelenke, z. B. Gummilager oder Kugelgelenke 46 mit dem gabelförmigen Abschnitt 24a des Stoßdämpfers 24 verbunden ist. Die Anlenkstelle der Koppelstange 44 am gabelförmigen Abschnitt 24a ist auf der Zeichnung nicht ersichtlich. Die Schenkel 30a des Stabilisators 30 sind derart nach oben und seitlich gekrümmt ausgeführt, dass der Freigang des Rades beim Lenkeinschlag und der Freigang der Spurstange 28 und des Lenkers 16 beim Durchfedern des Rades gewährleistet sind.

Durch die Ausrichtung der mit dem Stabilisator 30 verbundenen Koppelstange 44, die unmittelbar z. B. an den gabelförmigen Abschnitt 24a des Stoßdämpfers 24 oder des Traglenkers angrenzt, wobei die Koppelstange 44 etwa parallel zur noch zu beschreibenden Lenkachse 46 ausgerichtet ist, werden bei gleichseitigem und wechselseitigem Einfedern der Räder des Kraftfahrzeuges Einflüsse auf das Lenkverhalten nahezu eliminiert. Die Koppelstangen 44 sind dabei - wie in **Fig. 1** ersichtlich - in Rückansicht des Kraftfahrzeuges nach oben innen und in Seitenansicht nach oben vorne ausgerichtet.

Die virtuelle Lenkachse 46 der Radaufhängung 10 (vgl. **Fig. 4**) definiert sich aus der räumlichen Anordnung der Lenker 12, 14, 16, 18 und den Koppelabständen aₒ und aᵤ der entsprechenden Lagerstellen 12b, 14b bzw. den Gelenkmittelpunkten der Kugelgelenke 34, 36. Dabei ergibt sich die virtuelle Lenkachse 46 in der Geradeausfahrtstellung der Räder des Kraftfahrzeuges aus den windschief zueinander stehenden, gedachten Geraden durch die oberen und unteren Lenkerlagerungen in der Art, dass in Blickrichtung der Lenkachse alle vier Geraden einen Schnittpunkt bilden (**Fig. 4b**).

Beim Einlenken der Räder über den Lenkbereich (voller Linkseinschlag bis voller Rechtseinschlag) überstreicht die Lenkachse 46 eine gedachte Konusfläche, die nach unten zur Radaufstandsebene des Rades zu abnimmt. Diese Kinematik der Lenkachse 46 ergibt sich dadurch, dass der obere Koppelabstand aₒ in der Projektion in Richtung der Lenkachse 46 gesehen größer ist als der untere Koppelabstand aᵤ zwischen den entsprechenden Lagerstellen 12b, 14b bzw. den Kugelgelenkpunkten 34, 36 (**Fig. 4b**). Der tatsächliche, sog. räumliche, obere Koppelabstand aₒ ist dagegen kleiner als der tatsächliche räumliche untere Koppelabstand aᵤ.

Der obere Koppelabstand aₒ bestimmt sich in der Regel aus den baulichen Gegebenheiten und kann z. B. nicht kleiner ausgeführt sein, als dies die anzuordnenden Lagerstellen 12b, 14b (Kugelgelenke) zulassen.

Bei der Auslegung des unteren Koppelabstandes aᵤ ist noch zu berücksichtigen, dass der untere, vordere Lenker 16 als Traglenker ein größeres Kugelgelenk 36 erfordert, was der Vorgabe eines kleinen Koppelabstandes aᵤ an sich entgegensteht. Um trotzdem den gewünschten Koppelabstand aᵤ zu schaffen, sind die Kugelgelenke 34, 36 (vgl. **Fig. 2**) höhenversetzt zueinander und mit um 180 Grad zueinander verdrehten Kugelgelenken 34, 36 angeordnet; d. h., dass das Gehäuse 36a des Kugelgelenkes 36 unten in der Aufnahme 20b des Radträgers 20 positioniert ist, während das Gehäuse 34a darüber liegend in den Lenker 18 integriert ist. Die Gelenkzapfen (ohne Bezugszeichen) der Kugelgelenke 34, 36 ragen demzufolge entgegengesetzt ausgerichtet nach oben (Kugelgelenk 36) bzw. nach unten (Kugelgelenk 34).

Dies bewirkt eben, dass in der Projektion entlang der Lenkachse 46 gesehen der untere Koppelabstand aᵤ kleiner ist als der obere Koppelabstand aₒ mit der vorbeschriebenen Auswirkung auf die über den Lenkbereich sich ergebende Konusfläche der virtuellen Lenkachse 46.

Ferner ist die Anordnung der Lagerstellen bzw. Kugelgelenke 34, 36 des unteren Lenkers 16 am Radträger 20 derart ausgelegt, dass sich über den gesamten Lenkbereich der Radaufhängung eine überwiegend in Längsrichtung des Kraftfahrzeuges ausgerichtete Schnittfläche der von der Lenkachse 46 überstrichenen Konusfläche an der Radaufstandsfläche ergibt (vgl. Neigung der Geraden durch die Kugelgelenkmitten der Kugelgelenke 34, 36 in **Fig. 3** gegenüber der Fahrzeuglängsrichtung). Daraus resultiert eine verbesserte Lenkungsrückstellung der eingeschlagenen Räder in die Geradeausfahrtstellung, die die Lenkungsrückstellung ausgeübt von dem auf den vorderen, unteren Lenker 16 abgestützten Federbein 22, 24 unterstützt.

Die inneren Lenkerlager 16a, 18a der unteren Lenker 16, 18 sind in ihrer Federsteifigkeit unterschiedlich ausgelegt oder bevorzugt umschaltbare Gummi-Metall-Hülsenlager, die hydraulisch durch integrierte Hydraulikkammern und veränderbare Drosselelemente oder elektrisch mittels Befüllung mit einer rheologischen Flüssigkeit beaufschlagt sind. Derartige Lager sind an sich bekannt. Die Lenkerlager 16a, 18a werden abhängig von fahrspezifischen Parametern wie z.B. Geschwindigkeit des Kraftfahrzeuges, Fahrbahnzustand, Lenk- und Bremsreaktionen, Gierrate, Querbeschleunigung, Lenkwinkel der Räder, Beladungszustand, etc. über ein elektronisches Steuergerät (z. B. ESP) und/oder manuell umgeschaltet, um das Fahrverhalten des Kraftfahrzeuges von sportlich agil bis betont komfortabel einzustellen.

Die **Fig. 5** zeigt dazu, dass abhängig von den Lagersteifigkeiten der Lenkerlager 16a, 18a, in Verbindung mit der Ausrichtung der ebenfalls einen "steifen" Lenker darstellenden Spurstange 28 der Momentanpol Mp der unteren Lenker 16, 18 und des Radträgers 20 verändert und das Fahrverhalten des Kraftfahrzeuges von Übersteuernd in Untersteuernd bei Längs- und Seitenkräften ausgelegt werden kann.

Die Lage des Momentanpols Mp lässt sich zusätzlich aus der Pfeilung der unteren Lenker 16, 18 im Zusammenspiel mit der Spurstange 28 beeinflussen. Solange das Verhältnis der Steifigkeiten zwischen dem Lenkerlager 16a des quer abstützenden, vorderen Lenkers 16 zum Lenkerlager 18a des längs abstützenden, hinteren Lenkers 18 groß ist, kann letzterer in der Betrachtung vernachlässigt werden. Damit ergibt sich der Momentanpol Mp als Schnittpunkt der Wirklinien von Spurstange 28 und vorderem, unteren Lenker 16, wobei die Pfeilung derart ist, dass sich der Abstand zwischen der Spurstange 28 und dem Lenker 16 in der Draufsicht gesehen der senkrechten Fahrzeugmittelebene zu verjüngt.

Damit führt sowohl eine Längs- als auch eine Seitenkraft auf das Rad zu einer Spurwinkeländerung in Richtung Nachspur-das Fahrzeug reagiert im elastokinematischen Bereich untersteuernd. Gleichzeitig hat die Radaufhängung 10 aufgrund der geringeren Steifigkeit des unteren, hinteren Lenkerlagers 18a eine hohe Nachgiebigkeit in Längsrichtung, was sich bei einer Hindernisüberfahrt positiv im Komfort bemerkbar macht.

Wird die Steifigkeit des hinteren Lenkerlagers 18a merklich erhöht - entweder durch entsprechende Ansteuerung des umschaltbaren Lenkerlagers 18a oder durch entsprechende konstruktive Auslegung - so kann der Lenker 18 in der Betrachtung des Momentanpols Mp nicht mehr vernachlässigt werden. Die Lage des Momentanpols Mp ergibt sich nun aus der Ausrichtung der Spurstange 28 und einem virtuellen Ersatzlenker 48 (**Fig. 5**, gestrichelt eingezeichnet), der sich aus dem Steifigkeitsverhältnis der unteren Lenkerlager 16a, 18a ableiten lässt.

Gleichzeitig kann mit dem Steifigkeitsniveau der beiden unteren Lenker 16, 18 der Längs- und Seitenkrafteinfluss auf die Änderung des Spurwinkels des Rades begrenzt werden.

## Patentansprüche

1. Radaufhängung (10) für die gelenkten Räder eines Kraftfahrzeuges, mit je Rad zwei oberen aufgelösten Lenkern und (12, 14) zwei unteren aufgelösten Lenkern (16, 18), die in jeweils einem definierten Winkel zueinander angeordnet sind und eine virtuelle Lenkachse (46) definieren, wobei die Lenker (12, 14, 16, 18) einerseits mit dem Aufbau des Kraftfahrzeuges und andererseits mit einem Radträger (20) gelenkig verbunden sind, sowie mit einem über Spurstangen (28) an einem Lenkhebel des Radträgers (20) angreifenden Lenkgetriebe (26), wobei in der Projektion in Richtung der virtuellen Lenkachse (46) der radträgerseitige Koppelabstand (aₒ) der oberen Lenker (12, 14) größer ist als der radträgerseitige Koppelabstand (aᵤ) der unteren Lenker (16, 18), so dass die virtuelle Lenkachse (46) über den gesamten Lenkbereich gesehen eine sich nach unten, auf die Radaufstandsfläche zu verjüngende Konusfläche ausbildet, **dadurch gekennzeichnet, dass** dagegen räumlich gesehen der radträgerseitige Koppelabstand (aₒ) der oberen Lenker (12, 14) kleiner ist als der radträgerseitige Koppelabstand (aᵤ) der unteren Lenker (16, 18).

2. Radaufhängung nach Anspruch 1, **dadurch gekennzeichnet, dass** das Lenkgetriebe (26) mit den Spurstangen (28) in etwa auf Höhe der unteren Lenker (16, 18) und in Fahrtrichtung vor der Radmitte der Räder und der unteren, vorderen Lenker (16) angeordnet ist.

3. Radaufhängung nach Anspruch 1 oder 2, **dadurch gekennzeichnet, dass** zur Herstellung eines in der Projektion der Lenkachse (46) gesehen besonders kleinen Koppelabstandes (aᵤ) der unteren Lenker (16, 18) die Lagerstellen (34, 36) der Lenker (16, 18) am Radträger (20) höhenversetzt zueinander liegen.

4. Radaufhängung nach Anspruch 3, **dadurch gekennzeichnet, dass** die Lagerstellen Kugelgelenke (34, 36) sind, deren aus den Gelenkgehäusen (34a, 36a) ragende Gelenkachsen in zueinander um 180 Grad gedrehter Anordnung nach oben bzw. nach unten ragen.

5. Radaufhängung nach einem der vorstehenden Ansprüche, **dadurch gekennzeichnet, dass** die unteren, vorderen Lenker (16) in Draufsicht gesehen und in Geradeausfahrtstellung des Kraftfahrzeuges im wesentlichen parallel und quer zur Fahrzeuglängsachse ausgerichtet sind, während die unteren, hinteren Lenker (18) jeweils schräg nach hinten verlaufen.

6. Radaufhängung nach einem der vorhergehenden Ansprüche, **dadurch gekennzeichnet, dass** die Spurstangen (28) und die unteren, vorderen Lenker (16) in Draufsicht gesehen und in Geradeausfahrtstellung des Kraftfahrzeuges im wesentlichen parallel und quer zur Fahrzeuglängsachse ausgerichtet sind.

7. Radaufhängung nach einem der vorhergehenden Ansprüche, **dadurch gekennzeichnet, dass** die Anordnung der Lenker (16, 18) am Radträger (20) derart ausgelegt ist, dass sich über den gesamten Lenkbereich der Radaufhängung (10) eine überwiegend in Längsrichtung des Kraftfahrzeuges ausgerichtete Schnittfläche (50) der von der virtuellen Lenkachse (46) überstrichenen Konusfläche an der Radaufstandsfläche ergibt.

8. Radaufhängung nach einem der vorhergehenden Ansprüche, **dadurch gekennzeichnet, dass** die Lagerstellen (12b, 14b, 34, 36) zwischen den Lenkern (12, 14, 16, 18) und dem Radträger (20) oben über dem jeweiligen Rad so positioniert sind, dass der Abstand der virtuellen Lenkachse (46) zur Radmitte relativ gering ist.

9. Radaufhängung nach einem der vorhergehenden Ansprüche, **dadurch gekennzeichnet, dass** ein oberer Koppelwinkel der oberen Lenker (12, 14) so gewählt ist, dass der in Fahrtrichtung obere vordere Lenkerkoppelpunkt des oberen vorderen Lenkers (12) weiter außen liegt als der in Fahrtrichtung obere hintere Lenkerkoppelpunkt des oberen hinteren Lenkers (14), und
dass ein unterer Koppelwinkel der unteren Lenker (16, 18) so gewählt ist, dass der in Fahrtrichtung untere vordere Lenkerkoppelpunkt des unteren vorderen Lenkers (16) weiter innen liegt als der in Fahrtrichtung untere hintere Lenkerkoppelpunkt des unteren hinteren Lenkers (18).

## Claims

1. Wheel suspension system (10) for the steered wheels of a motor vehicle, having, per wheel, two upper separated links (12, 14) and two lower separated links (16, 18) which are arranged in each case at a defined angle with respect to one another and define a virtual steering axis (46), the links (12, 14, 16, 18) being connected in an articulated manner on one side to the body of the motor vehicle and on the other side to a wheel carrier (20), and having a steering gear (26) which acts on a steering arm of the wheel carrier (20) via steering rods (28), the wheel carrier-side coupling spacing (aₒ) of the upper links (12, 14) being greater, in the projection in the direction of the virtual steering axis (46), than the wheel carrier-side coupling spacing (aᵤ) of the lower links (16, 18), with the result that, as viewed over the entire steering range, the virtual steering axis (46) forms a conical area which tapers downwards towards the wheel contact area, **characterized in that**, in contrast, the wheel carrier-side coupling spacing (aₒ) of the upper links (12, 14) is smaller, as viewed three-dimensionally, than the wheel carrier-side coupling spacing (aᵤ) of the lower links (16, 18).

2. Wheel suspension system according to Claim 1, **characterized in that** the steering gear (26) is arranged with the steering rods (28) approximately at the level of the lower links (16, 18) and, in the driving direction, in front of the wheel centre of the wheels and the lower, front links (16).

3. Wheel suspension system according to Claim 1 or 2, **characterized in that**, in order to produce a particularly small coupling spacing (aᵤ) of the lower links (16, 18) as viewed in the projection of the steering axis (46), the bearing points (34, 36) of the links (16, 18) on the wheel carrier (20) lie offset vertically with respect to one another.

4. Wheel suspension system according to Claim 3, **characterized in that** the bearing points are ball joints (34, 36), the joint axes of which, which protrude out of the joint housings (34a, 36a), protrude upwards or downwards in an arrangement which is rotated by 180 degrees with respect to one another.

5. Wheel suspension system according to one of the preceding claims, **characterized in that**, as viewed in plan view and in the straight-ahead driving position of the motor vehicle, the lower, front links (16) are oriented substantially parallel to and transversely with respect to the vehicle longitudinal axis, while the lower, rear links (18) in each case extend obliquely rearwards.

6. Wheel suspension system according to one of the preceding claims, **characterized in that**, as viewed in plan view and in the straight-ahead driving position of the motor vehicle, the steering rods (28) and the lower, front links (16) are oriented substantially parallel to and transversely with respect to the vehicle longitudinal axis.

7. Wheel suspension system according to one of the preceding claims, **characterized in that** the arrangement of the links (16, 18) on the wheel carrier (20) is configured in such a way that an intersecting plane (50) of the conical area, which is passed over by the virtual steering axis (46), on the wheel contact area, which intersecting plane (50) is oriented predominantly in the longitudinal direction of the motor vehicle, results over the entire steering range of the wheel suspension system (10).

8. Wheel suspension system according to one of the preceding claims, **characterized in that** the bearing points (12b, 14b, 34, 36) between the links (12, 14, 16, 18) and the wheel carrier (20) are positioned at the top above the respective wheel in such a way that the spacing of the virtual steering axis (46) from the wheel centre is relatively small.

9. Wheel suspension system according to one of the preceding claims, **characterized in that** an upper coupling angle of the upper links (12, 14) is selected in such a way that the upper front (in the driving direction) link coupling point of the upper front link (12) lies further to the outside than the upper rear (in the driving direction) link coupling point of the upper rear link (14), and **in that** a lower coupling angle of the lower links (16, 18) is selected in such a way that the lower front (in the driving direction) link coupling point of the lower front link (16) lies further to the inside than the lower rear (in the driving direction) link coupling point of the lower rear link (18).

## Revendications

1. Suspension de roue (10) pour les roues directrices d'un véhicule automobile, comprenant deux bras oscillants séparés supérieurs (12, 14) et deux bras oscillants séparés inférieurs (16, 18) par roue, lesquels sont disposés suivant un angle défini les uns par rapport aux autres et définissent un axe de direction virtuel (46), les bras oscillants (12, 14, 16, 18) étant connectés de manière articulée d'une part à la carrosserie du véhicule automobile et d'autre part à un support de roue (20), la suspension de roue comprenant également un mécanisme de direction (26) agissant sur un levier de direction du support de roue (20) par le biais de barres d'accouplement (28), la distance d'accouplement (aₒ) du côté du support de roue des bras oscillants supérieurs (12, 14), en projection dans la direction de l'axe de direction virtuel (46), étant supérieure à la distance d'accouplement (aᵤ) du côté du support de roue des bras oscillants inférieurs (16, 18), de sorte que l'axe de direction virtuel (46) constitue, vu sur toute la plage de direction, une surface conique se rétrécissant vers le bas vers la surface d'appui des roues, **caractérisée en ce que** par contre, vu spatialement, la distance d'accouplement (aₒ) du côté du support de roue des bras oscillants supérieurs (12, 14) est inférieure à la distance d'accouplement (aᵤ) du côté du support de roue des bras inférieurs (16, 18).

2. Suspension de roue selon la revendication 1, **caractérisée en ce que** le mécanisme de direction (26) est disposé avec les barres d'accouplement (28) approximativement à la hauteur des bras oscillants inférieurs (16, 18) et dans la direction de conduite avant le milieu de roue des roues et des bras oscillants avant inférieurs (16).

3. Suspension de roue selon la revendication 1 ou 2, **caractérisé en ce que** pour la réalisation d'une distance d'accouplement (aᵤ) des bras oscillants inférieurs (16, 18) particulièrement petite vue dans la projection de l'axe de direction (46), les points de support (34, 36) des bras oscillants (16, 18) sur le support de roue (20) se situent de manière décalée vers le haut les uns par rapport aux autres.

4. Suspension de roue selon la revendication 3, **caractérisée en ce que** les points de support sont des articulations à rotule (34, 36), dont les axes d'articulation saillant hors des boîtiers d'articulation (34a, 36a) font saillie vers le haut, respectivement vers le bas suivant un agencement tourné de 180° l'un par rapport à l'autre.

5. Suspension de roue selon l'une quelconque des revendications précédentes, **caractérisée en ce que** les bras oscillants avant inférieurs (16), vus en vue de dessus et dans la position de conduite en ligne droite du véhicule automobile, sont orientés essentiellement parallèlement et transversalement à l'axe longitudinal du véhicule, tandis que les bras oscillants arrière inférieurs (18) s'étendent à chaque fois obliquement vers l'arrière.

6. Suspension de roue selon l'une quelconque des revendications précédentes, **caractérisée en ce que** les barres d'accouplement (28) et les bras oscillants avant inférieurs (16), vus en vue de dessus et dans la position de conduite en ligne droite du véhicule automobile, sont orientés essentiellement parallèlement et transversalement à l'axe longitudinal du véhicule.

7. Suspension de roue selon l'une quelconque des revendications précédentes, **caractérisée en ce que** l'agencement des bras oscillants (16, 18) sur le support de roue (20) est conçu de telle sorte que sur toute la plage de direction de la suspension de roue (10), on obtienne une surface en coupe (50) de la surface conique balayée par l'axe de direction virtuel (46) sur la surface d'appui des roues qui soit orientée essentiellement dans la direction longitudinale du véhicule automobile.

8. Suspension de roue selon l'une quelconque des revendications précédentes, **caractérisée en ce que** les points de support (12b, 14b, 34, 36) entre les bras oscillants (12, 14, 16, 18) et le support de roue (20) sont positionnés en haut au-dessus de la roue respective de telle sorte que la distance de l'axe de direction virtuel (46) au milieu de roue soit relativement petite.

9. Suspension de roue selon l'une quelconque des revendications précédentes, **caractérisée en ce qu'**un angle d'accouplement supérieur des bras oscillants supérieurs (12, 14) est choisi de telle sorte que le point d'accouplement du bras oscillant avant supérieur dans la direction de conduite du bras oscillant avant supérieur (12) se situe plus à l'extérieur que le point d'accouplement de bras oscillant arrière supérieur dans la direction de conduite du bras oscillant arrière supérieur (14), et
**en ce qu'**un angle d'accouplement inférieur des bras oscillants inférieurs (16, 18) est choisi de telle sorte que le point d'accouplement de bras oscillant avant inférieur dans la direction de conduite du bras oscillant avant inférieur (16) se situe davantage vers l'intérieur par rapport au point d'accouplement de bras oscillant arrière inférieur dans la direction de conduite du bras oscillant arrière inférieur (18).
